# EUROPÄISCHE PATENTANMELDUNG

(11) **EP 4 470 807 A1**
(43) Veröffentlichungstag der Anmeldung: **04.12.2024**
(21) Anmeldenummer: 24166862.3
(22) Anmeldetag: 27.03.2024
(51) Int. Cl.: B60H 1/00, B60H 1/32

(54) **KOMPONENTENMODUL FÜR EIN WÄRMEPUMPENSYSTEM EINES FAHRZEUGS**

(30) Priorität: 31.05.2023 DE 102023114189; 10.01.2024 DE 102024100640
(71) Anmelder: Hanon Systems, Daejeon 34325 (KR)
(72) Erfinder: Spies, Toni, 50169 Kerpen (DE); Bieregger, Florian, 81675 München (DE)
(74) Vertreter: Sperling, Thomas

(57) **Zusammenfassung**

Die Erfindung betrifft ein Komponentenmodul (1) eines Wärmepumpensystems für Fahrzeuge, insbesondere batterieelektrische Fahrzeuge (BEVs), welches zumindest folgende Komponenten aufweist: einen Kompressor mit einem Kompressorgehäuse (2), welches sich mit seiner Körperlänge entlang einer Kompressorrotationsachse (R) erstreckt, einen ersten Wärmeübertrager (3) und einen zweiten Wärmeübertrager (4), welche eine Körperlänge größer als eine Körperbreite aufweisen, einen Sammelbehälter (5) für Kältemittel, eine Fluidverteilereinrichtung (6), welche zur Beeinflussung eines Kältemittel-Strömungspfades eingerichtet ist, Kältemittel-Fluidschnittstellen (3.3, 4.3, 4.4, 4.5, 4.6, 7.1, 13), Kühlmittel-Fluidschnittstellen (3.1, 3.2, 4.1, 4.2) und Kältemitte-Fluidleitungen (8.1, 8.2, 8.3, 8.4, 8.5), welche die Komponenten strömungstechnisch miteinander verbinden, wobei
- der erste Wärmeübertrager (3) mit seiner Körperlänge entlang einer ersten Hauptrichtung (T1) orientiert ist,
- der zweite Wärmeübertrager (4) mit seiner Körperlänge orthogonal zur ersten Hauptrichtung (T1) entlang einer Vertikalrichtung (V) orientiert ist, und
- das Kompressorgehäuse (2) mit seiner Körperlänge entlang einer zweiten Hauptrichtung (T2) orientiert ist, welche in eine Längsrichtung (L) versetzt zur ersten Hauptrichtung (T1) parallel ist.

## Beschreibung

Die Erfindung betrifft ein Komponentenmodul für ein Wärmepumpensystem eines Fahrzeugs, insbesondere für ein Wärmepumpensystem eines batterieelektrischen Fahrzeugs. Das Komponentenmodul umfasst mehrere Komponenten eines Wärmepumpensystems und ist zum Heizen und/oder Kühlen geeignet.

Wärmepumpen bieten eine effiziente Methode zur Übertragung von Wärmeenergie, weshalb sie bevorzugt in batterieelektrischen Fahrzeugen (BEV) eingesetzt werden. Dabei dienen Wärmepumpen einerseits zur Temperierung des Fahrzeuginnenraums und andererseits zur Temperierung der Fahrzeugbatterien. Das Temperieren der Fahrzeugbatterien gewährleistet optimale Betriebsbedingungen, was zu einer verbesserten Leistung führt und die Lebensdauer der Fahrzeugbatterien verlängert. Dies ist wichtig, um die Reichweite und Zuverlässigkeit von batterieelektrischen Fahrzeugen zu erhöhen. Das Temperieren umfasst eine Temperaturveränderung entweder zum Heizen oder zum Kühlen, wobei die Wärmepumpe verschiedene Wärmequellen und Wärmesenken in unterschiedlichen Fluidkreisläufen nutzen kann. Beispielsweise erfordert die Inbetriebnahme eines BEVs bei niedrigen Außentemperaturen zunächst eine Erwärmung der Fahrzeugbatterien, wobei Umgebungsluft als Wärmequelle dient. Beim elektrischen Be- und Entladen kann hingegen eine Kühlung der Fahrzeugbatterien erforderlich sein, um einer Überhitzung infolge einer Wärmeentwicklung entgegenzuwirken. Die in den Batterien entstehende Wärme kann mittels Kühlmittelkreisläufen an die Umgebung oder zur Beheizung des Fahrzeuginnenraums abgegeben werden.

Ein Wärmepumpensystem umfasst verschiedene in einem Kältemittelkreislauf fluidisch miteinander verbundene Komponenten. Hierzu zählen üblicherweise ein Kompressor zum Verdichten eines Kältemittels, ein erster Wärmeübertrager in der Funktion eines Verdampfers, ein zweiter Wärmeübertrager in der Funktion eines Kondensators und ein Expansionsorgan, um den Druck eines zirkulierenden Kältemittels zu verändern. Das Wärmepumpensystem nutzt das Prinzip der Verdampfung und Kondensation des Kältemittels, wobei in den Wärmeübertragern eine Übertragung von Wärme zwischen dem Kältemittel und einem weiteren Fluid, beispielsweise einem Kühlmittel eines separaten Kühlmittelkreislaufs, erfolgt. Das Kühlmittel dient dann zum Transport der Wärme an den gewünschten Ort im oder am Fahrzeug.

In der Vergangenheit stand ein hoher Platzbedarf von Wärmepumpensystemen oftmals im Konflikt mit der Anordnung von weiteren Fahrzeugkomponenten. Dies war der Anlass für Weiterentwicklungen hin zu kompakteren Komponentenanordnungen, bei welchen mehrere Komponenten des Wärmepumpensystems in einem gemeinsamen Modul strömungstechnisch miteinander verbunden sind. Ein Beispiel für eine solche Anordnung geht aus der Lehre EP 4 144 549 A1 hervor. Das dort beschriebene Heiz- und/oder Kühlmodul umfasst als Komponenten einen Kompressor mit einem Wärmeübertrager zur Wärmeübertragung zwischen einem Kältemittel und einem Kühlmittel sowie eine Speichervorrichtung zum Speichern von Kältemittel. Die einzelnen Komponenten sind strömungstechnisch so miteinander verbunden, dass ein Kältemittel zirkulieren kann. Die Anordnung der Komponenten ist an einem Raumachsensystem bestehend aus einer L-Richtung, einer gegenüber der L-Richtung orthogonalen T-Richtung und einer V-Richtung, welche orthogonal zur L- und T-Richtung ist, orientiert. Dabei erstreckt sich der Wärmeübertrager mit seiner längsten Körpergröße beziehungsweise mit seiner Körperlänge parallel zur L-Richtung, wobei sich der Kompressor mit seiner längsten Körperseite, welche der Orientierung der Rotationsachse des Kompressors entspricht, im Wesentlichen entlang der T-Richtung erstreckt und somit gegenüber dem Wärmeübertrager orthogonal orientiert ist. Diese Anordnung ermöglicht eine platzsparende Konfiguration der Komponenten - weist jedoch einen erhöhten Bauraumbedarf in der von den L- und V-Richtungen aufgespannten L-V-Ebene insbesondere in L-Richtung auf. Diese Anordnung der Komponenten macht es erforderlich, dass sich die Verbindungsleitungen, wie beispielsweise die Kältemittelleitung zwischen dem Kompressor und dem Wärmeübertrager, bauartbedingt zum Teil über die gesamte L-V-Ebene erstrecken müssen, wodurch die Zugänglichkeit zu weiteren Kühl- oder Kältemittelleitungen sowie zu elektrischen Steckverbindungen teilweise versperrt ist. Weiterhin kommt die Ausdehnung der Anordnung in der L-V-Ebene nicht ohne zusätzliche Halterungen aus, da der Wärmeübertrager gegenüber dem Kompressor abgestützt werden muss, was mit einem zusätzlichen Kostenaufwand verbunden ist und das Modulgewicht erhöht.

Vor diesem Hintergrund liegt der Erfindung die Aufgabe zugrunde, ein Komponentenmodul für ein Wärmepumpensystem eines Kraftfahrzeugs/BEVs vorzuschlagen, welches ein noch geringeres Bauraumvolumen für die Anordnung der verschiedenen Komponenten erfordert und eine bessere Zugänglichkeit zu Kältemittel- und Kühlmittel-Fluidleitungen sowie elektrische Anschlusseinrichtungen gewährleistet.

Die Aufgabe wird durch ein Kältemittelmodul mit den Merkmalen gemäß Patentanspruch 1 gelöst. Weiterbildungen sind in den abhängigen Patentansprüchen angegeben.

Vorgeschlagen wird eine platzsparende räumliche Anordnung von Komponenten eines Wärmepumpensystems innerhalb eines Komponentenmoduls. Dabei weist das erfindungsgemäße Komponentenmodul zumindest folgende Komponenten auf: Einen Kompressor zum Verdichten eines Kältemittels, wobei der Kompressor in einem Kompressorgehäuse aufgenommen ist, welches sich mit seiner Körperlänge entlang einer Kompressorrotationsachse erstreckt. Als weitere Komponenten weist die Komponentenanordnung einen ersten Wärmeübertrager und einen zweiten Wärmeübertrager auf. Die Wärmeübertrager sind zur Übertragung von Wärme zwischen einem Kältemittel und einem Kühlmittel eingerichtet und weisen eine Körperlänge größer als eine Körperbreite auf. Weiterhin ist ein Sammelbehälter für Kältemittel vorgesehen, um das Kältemittel im Verlauf des Kältemittelkreislaufs zumindest zum Teil in flüssiger Form zu speichern. Als weitere Komponente ist eine Fluidverteilereinrichtung vorgesehen, welche zur Beeinflussung eines Kältemittel-Strömungspfades eingerichtet ist. Die Komponenten verfügen über Fluidschnittstellen für Kältemittel und/oder Kühlmittel sowie Fluidleitungen, mit welchen die Komponenten strömungstechnisch miteinander verbunden sind. Im Folgenden werden Fluidleitungen für Kältemittel als Kältemittel-Fluidleitungen bezeichnet. Gleichermaßen werden Fluidschnittstellen für Kältemittel oder Kühlmittel als Kältemittel-Fluidschnittstellen oder Kühlmittelfluidschnittstellen bezeichnet.

Erfindungsgemäß sind die Komponenten in ihrer Anordnung innerhalb des Komponentenmoduls wie folgt orientiert: Der erste Wärmeübertrager ist mit seiner Körperlänge entlang einer ersten Hauptrichtung orientiert, wobei der zweite Wärmeübertrager mit seiner Körperlänge orthogonal zur ersten Hauptrichtung entlang einer Vertikalrichtung orientiert ist. Die Körperlänge des ersten Wärmeübertragers erstreckt sich somit senkrecht zu Körperlänge des zweiten Wärmeübertragers, wobei zwischen dem ersten Wärmeübertrager und dem zweiten Wärmeübertrager ein Luftspalt vorhanden ist, um eine Wärmebrücke zu vermeiden. Das Kompressorgehäuse ist mit seiner Körperlänge entlang einer zweiten Hauptrichtung orientiert, welche mit der Kompressorrotationsachse zusammenfällt und in eine Längsrichtung versetzt zur ersten Hauptrichtung parallel ist. Dadurch sind der erste Wärmeübertrager und das Kompressorgehäuse mit ihren Körperlängen parallel nebeneinander angeordnet, was eine Ausdehnung des Komponentenmoduls in die quer zu den Hauptrichtungen orientierte Längsrichtung reduziert.

Nach der Konzeption der Erfindung betreffen die beiden parallelen Hauptrichtungen, die Längsrichtung und die Vertikalrichtung, Raumachsen, von welchen die beiden Hauptrichtungen und die senkrecht zu den beiden Hauptrichtungen orientierte Längsrichtung in einer Ebene liegen können, wobei die Vertikalachse in Bezug auf die aus den beiden Hauptrichtungen und der Längsrichtung gebildeten Ebene senkrecht orientiert ist. Gemäß einer weiteren Ausgestaltung bilden eine der beiden Hauptrichtungen und die Längsrichtung eine Ebene wobei die andere Hauptrichtung in Richtung der Vertikalachse verschoben ist.

Gemäß einer bevorzugten Ausgestaltung sind die Wärmeübertrager im Wesentlichen in der Form eines Quaders ausgebildet, welcher eine Körperlänge größer als eine Körperbreite aufweist. Dabei kann die Quaderform zwei unterschiedlich große Körperbreiten aufweisen, welche jedoch jeweils kleiner sind als die Körperlänge.

Die räumliche Ausdehnung des Komponentenmoduls in der ersten Hauptausrichtung wird durch die Anordnung des zweiten Wärmeübertragers mit der Orientierung seiner Körperlänge in Richtung der Vertikalachse erreicht. Somit können der erste Wärmeübertrager und der zweite Wärmeübertrager entlang der ersten Hauptrichtung nebeneinander angeordnet sein, ohne die räumliche Ausdehnung der Körperlänge des Kompressorgehäuses wesentlich zu überragen. Vorzugsweise sind die Wärmeübertrager jedoch so dimensioniert, dass sie entlang der ersten Hauptrichtung nebeneinander angeordnet die räumliche Ausdehnung der Körperlänge des Kompressorgehäuses nicht überragen.

Die Anordnung der Komponenten des erfindungsgemäßen Komponentenmoduls basiert konzeptionsgemäß auf einer gleichmäßigen Ausdehnung in den zur Verfügung stehenden Raumrichtungen, mit dem Ziel, ein möglichst geringes Bauraumvolumen zu erreichen. Dabei sind die Komponenten mit ihren Körperlängen innerhalb des Komponentenmoduls vorteilhaft so angeordnet, dass die räumliche Ausdehnung des Komponentenmoduls in den betreffenden Raumrichtungen minimal ist. Bei dieser Konzeption wird eine wie im Stand der Technik beschriebene räumliche Ausdehnung, welche in eine einzelne Raumrichtung im Verhältnis zur Ausdehnung in weitere Raumrichtungen wesentlich größer ist, vermieden, wodurch vorteilhaft eine Reduzierung des erforderlichen Bauraumvolumens erzielt wird.

Innerhalb des Komponentenmoduls kann eine Befestigung des ersten Wärmeübertragers und/oder des zweiten Wärmeübertragers an dem Kompressorgehäuse vorgesehen sein. Ferner kann der erste Wärmeübertrager an dem zweiten Wärmeübertrager befestigt sein, wobei dann der zweite Wärmeübertrager an dem Kompressorgehäuse befestigt ist. Vorzugsweise ist der erste Wärmeübertrager fest mit dem Kompressorgehäuse verschraubt.

Die Fluidverteilereinrichtung kann einen Ventilblock mit mindestes zwei, bevorzugt drei, besonders bevorzugt vier Ventilen aufweisen, wobei die Ventile im Ventilbock parallel zur Vertikalrichtung orientiert sind. Durch die Ventile sind unterschiedliche Strömungspfade für Kältemittel und somit unterschiedliche Betriebsmodi zur Temperierung realisierbar. Während bei Ausgestaltungen mit zwei Ventilen diese als Expansionsventile dienen, können Ausgestaltungen mit drei oder vier Ventilen weitere Betriebsmodi, wie zum Beispiel einen (ineffizienten) Boost-Heizbetrieb realisieren.

Der Ventilblock der Fluidverteilereinrichtung und der erste Wärmeübertrager können so miteinander verbunden sein, dass der erste Wärmeübertrager und der Ventilblock der Fluidverteilereinrichtung eine strömungstechnische Verbindung für das Kältemittel bilden, ohne dass externe Kältemittel-Fluidleitungen zwischen dem ersten Wärmeübertrager und dem Ventilblock der Fluidverteilereinrichtung erforderlich sind. Die strömungstechnische Verbindung für Kältemittel wird in diesem Fall durch im Gehäuse der gegenüberliegenden Komponenten ausgebildeten korrespondierenden Kältemittel-Fluidschnittstellen bereitgestellt. Zu diesem Zweck können der erste Wärmeübertrager und der Ventilblock der Fluidverteilereinrichtung an einander zugewandten Seiten so miteinander kontaktiert sein, dass zwischen dem ersten Wärmeübertrager und dem Ventilblock keine externen Fluidleitungen erforderlich sind. Die korrespondierenden Öffnungen von gegenüberliegenden Kältemittel-Fluidschnittstellen ermöglichen somit eine Kältemittelströmung von dem Ventilblock der Fluidverteilereinrichtung in den ersten Wärmeübertrager. Zur Vermeidung von Leckagen können Dichtungen, wie beispielsweise eine Flächendichtung, zwischen dem Ventilblock der Fluidverteilereinrichtung und dem ersten Wärmeübertrager angeordnet sein.

Zwischen dem Kompressorgehäuse und dem zweiten Wärmeübertrager kann ein Luftspalt ausgebildet sein, um eine Wärmebrücke zu vermeiden.

Eine Befestigung der Komponenten mit und an dem Kompressorgehäuse ist bevorzugt, denn das Kompressorgehäuse weist eine hohe Steifigkeit und ein ausreichendes Materialvolumen zur Ausbildung von Gewindelöchern auf, in welche Befestigungsschrauben zum Befestigen der weiteren Komponenten eingeschraubt werden können.

In der erfindungsgemäßen Konfiguration ist das Komponentenmodul insbesondere für batterieelektrische Fahrzeuge (BEVs) vorgesehen, da sie zum Heizen und/oder Kühlen eingerichtet ist.

Gemäß einer bevorzugten Ausgestaltung des erfindungsgemäßen Komponentenmoduls sind der erste Wärmeübertrager und der zweite Wärmeübertrager strömungstechnisch so miteinander verbunden, dass der erste Wärmeübertrager als Verdampfer (Chiller) für Kältemittel eingerichtet ist, wobei der zweite Wärmeübertrager als Kondensator für Kältemittel eingerichtet ist. Der zweite Wärmeübertrager kann als Kombination aus Kondensator und innerem Wärmeübertrager (IWT) ausgebildet sein und somit für unterschiedliche Betriebsmodi eingesetzt werden. Diesbezüglich kann zwischen dem zweiten Wärmeübertrager und dem Ventilblock der Fluidverteilereinrichtung eine Kältemittel-Fluidleitung ausgebildet sein. Ein innerer Wärmeübertrager bezeichnet die Funktion eines Kältemittelkreislauf internen Wärmeübertragers.

Beide Wärmeübertrager sind dazu geeignet Wärme zwischen einem Kältemittel und einem Kühlmittel zu übertragen. Die strömungstechnische Verbindung der Wärmeübertrager ermöglicht einen Heiz-Betrieb und/oder ein Kühl-Betrieb, so dass das Komponentenmodul zum Heizen und/oder Kühlen geeignet ist. Der erste Wärmeübertrager und der zweite Wärmeübertrager sind fluidtechnisch somit direkt miteinander verbunden.

Dem Konzept der platzsparenden Anordnung folgend, kann die Fluidverteilereinrichtung, welche zur Beeinflussung der Strömungspfade des Kältemittels innerhalb des Komponentenmoduls eingerichtet ist, vorzugsweise am Kompressorgehäuse entlang der Körperlänge des Kompressorgehäuses neben dem zweiten Wärmeübertrager so befestigt sein, dass sie die Körperlänge des zweiten Wärmeübertragers in der Vertikalrichtung nicht überragt. Die Bauraumhöhe der Fluidverteilereinrichtung liegt somit in der Vertikalrichtung vorteilhaft auf gleicher Höhe oder unterhalb der räumlichen Ausdehnung der Körperlänge des zweiten Wärmeübertragers, wenn sie am Kompressorgehäuse befestigt ist. In Längsrichtung kann zwischen der Fluidverteilereinrichtung und dem zweiten Wärmeübertrager ein Luftspalt ausgebildet sein, welcher einen direkten Kontakt zwischen diesen Komponenten verhindert. Zur Befestigung kann die Fluidverteilereinrichtung mit dem Kompressorgehäuse verschraubt sein.

Der Sammelbehälter für Kältemittel ist dazu ausgelegt, Kältemittel in flüssiger Form zu speichern. Seine Körperlänge, welche vorzugsweise eine kreiszylindrische Form aufweist, kann größer als eine Körperbreite sein, wobei der Sammelbehälter neben dem zweiten Wärmeübertrager angeordnet mit seiner Körperlänge parallel zur Vertikalrichtung orientiert ist. Vorzugsweise ist der Sammelbehälter entlang der ersten Hauptrichtung neben dem zweiten Wärmeübertrager angeordnet, so dass sich der zweite Wärmeübertrager entlang der ersten Hauptrichtung in einer Anordnung zwischen dem Sammelbehälter und dem ersten Wärmeübertrager befindet. Dabei kann der Sammelbehälter so dimensioniert sein, dass er den zweiten Wärmeübertrager in der Vertikalrichtung nicht überragt.

Zur Reduzierung von Geräuschen kann entlang des Kältemittelkreislaufs des Komponentenmoduls ein Muffler als weitere Komponente vorgesehen sein. Der Muffler kann eine Körperlänge größer als eine Körperbreite aufweisen, wobei der Muffler gemäß einer Ausgestaltung des Komponentenmoduls innerhalb der Anordnung im Komponentenmodul neben dem Sammelbehälter mit seiner Körperlänge im Wesentlichen parallel zur Längsrichtung orientiert sein kann. In dieser Orientierung ist der Muffler in Bezug auf den Sammelbehälter in Richtung der Hauptrichtungen versetzt quer zum Sammelbehälter angeordnet. Vorzugsweise ist der Muffler mit seiner Körperlänge so dimensioniert, dass er die weiteren in der Längsrichtung nebeneinander angeordneten Komponenten des Komponentenmoduls nicht überragt. Aufgrund seiner verhältnismäßig geringen Abmaße kann der Muffler auch an anderen Positionen des Komponentenmoduls platzsparend angeordnet sein.

Das Komponentenmodul weist Fluidschnittstellen als Fluidanschlüsse zur Einbindung an einen Kühlmittelkreislauf und weitere Fluidschnittstellen als Fluidanschlüsse für einen Kältemittelkreislauf auf. Gemäß einer bevorzugten Ausgestaltung des Komponentenmoduls befinden sich alle Kühlmittel-Fluidschnittstellen an einer Seite des Komponentenmoduls. Das heißt, dass die Kühlmittelanschlüsse des ersten Wärmeübertragers und des zweiten Wärmeübertragers zu einer Seite des Komponentenmoduls hin orientiert sind. Vorteilhaft sind somit alle Kühlmittel-Fluidschnittstellen von einer Seite des Komponentenmoduls zugänglich.

Gemäß einer besonders bevorzugten Ausgestaltung weist der zweite Wärmeübertrager in der Anordnung im Komponentenmodul eine Innenseite und eine Außenseite auf, wobei an der Innenseite zumindest eine Kältemittel-Fluidschnittstelle parallel zur ersten Hauptrichtung orientiert ausgebildet ist. Dabei kann eine das Kompressorgehäuse und den zweiten Wärmeübertrager verbindende Kältemittel-Fluidleitung an der mindestens einen Kältemittel-Fluidschnittstelle angeschlossen sein. Dies hat den Vorteil, dass die Kältemittel-Fluidleitung parallel zur ersten Hauptrichtung angeschlossen werden kann und den zweiten Wärmeübertrager in der Vertikalrichtung somit nicht überragt. Dadurch sind die Kältemittel-Fluidleitungen geschützt und mit geringem Bauraumbedarf angeordnet. Die Innenseite des zweiten Wärmeübertragers ist einer Innenseite des gegenüberliegend angeordneten ersten Wärmeübertragers zugewandt. Die nebeneinander entlang der ersten Hauptrichtung angeordneten Wärmeübertrager weisen somit gegenüberliegend zugewandte Innenseiten auf, zwischen welchen ein Luftspalt ausgebildet ist.

An seiner der Innenseite gegenüberliegenden Außenseite kann der zweite Wärmeübertrager ebenfalls Kältemittel-Fluidschnittstellen aufweisen, wobei die außenseitig ausgebildeten Kältemittel-Fluidschnittstellen parallel zur ersten Hauptrichtung orientiert sein können.

Das erfindungsgemäße Komponentenmodul realisiert eine noch kompaktere Anordnung von Komponenten eines Wärmepumpensystems, so dass vorteilhaft eine noch weitere Bauraumvolumenreduzierung erreicht wird. Dadurch, dass die Komponenten miteinander und aneinander befestigt sind, wird dem Komponentenmodul eine ausreichende Stabilität und Steifigkeit verliehen, ohne dass weitere Halterungen oder Knotenelemente erforderlich sind. Dies trägt zu einer Gewichtsreduktion und letztlich zu einer Kostenreduktion bei.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- Fig. 1:: eine schematische Perspektivansicht eines Ausführungsbeispiels des Komponentenmoduls für ein Wärmepumpensystem eines Fahrzeugs, und
- Fig. 2:: eine Draufsicht des in Figur 1 gezeigten Ausführungsbeispiels des Komponentenmoduls für ein Wärmepumpensystem eines Fahrzeugs.

In den Figuren sind wiederkehrende Merkmale des Komponentenmoduls für ein Wärmepumpensystem eines Fahrzeugs mit gleichen Bezugszeichen gekennzeichnet.

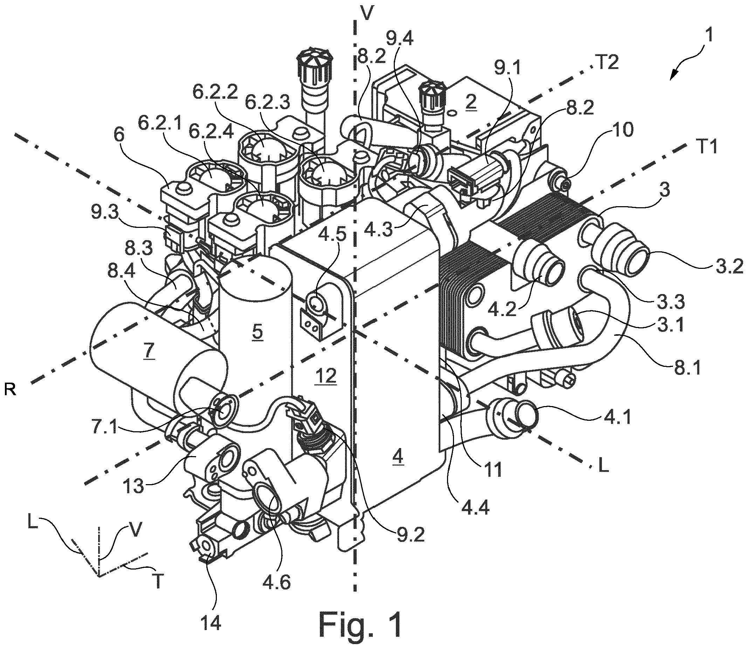

Die **Figur 1** zeigt eine schematische Perspektivansicht eines Ausführungsbeispiels des Komponentenmoduls 1 für ein Wärmepumpensystem eines Fahrzeugs. Als Komponenten umfasst die Komponentenanordnung 1 einen Kompressor zum Verdichten eines Kältemittels, wobei der Kompressor in einem Kompressorgehäuse 2 aufgenommen ist, welches sich mit seiner Körperlänge entlang einer Kompressorrotationsachse R erstreckt. Als weitere Komponenten weist die Komponentenanordnung 1 einen ersten Wärmeübertrager 3 und einen zweiten Wärmeübertrager 4 auf. Beide Wärmeübertrager 3 und 4 weisen eine Quaderform mit einer Körperlänge größer als eine Körperbreite auf. Dabei kann die Quaderform zwei unterschiedlich große Körperbreiten aufweisen, welche jedoch jeweils kleiner sind als die Körperlänge.

Der erste Wärmeübertrager 3 ist mit seiner Körperlänge entlang einer ersten Hauptrichtung T1 orientiert, wobei der zweite Wärmeübertrager 4 mit seiner Körperlänge orthogonal zur ersten Hauptrichtung T1 entlang einer Vertikalrichtung V orientiert ist. Die Körperlänge des ersten Wärmeübertragers 3 erstreckt sich somit senkrecht zu Körperlänge des zweiten Wärmeübertragers 4, wobei zwischen dem ersten Wärmeübertrager 3 und dem zweiten Wärmeübertrager 4 ein Luftspalt vorhanden ist. Der erste Wärmeübertrager 3 ist zum Übertragen von Wärme zwischen einem Kühlmittel und einem Kältemittel eingerichtet und weist zwei Kühlmittel-Fluidschnittstellen 3.1 und 3.2 auf. Die Kühlmittel-Fluidschnittstellen 3.1 und 3.2 dienen als Fluidanschlüsse zur Einbindung in einen Kühlmittelkreislauf. Zur Einbindung in den Kältemittelkreislauf weist der erste Wärmeübertrager 3 zwei Kältemittel-Fluidschnittstellen auf, von welchen in der gezeigten Darstellung nur eine zu sehen ist. Diese ist mit dem Bezugszeichen 3.3 gekennzeichnet. Eine erste Fluidschnittstelle 3.3 für Kältemittel des ersten Wärmeübertragers 3 führt über eine Kältemittel-Fluidleitung 8.1 zur strömungstechnischen Verbindung an eine Kältemittel-Fluidschnittstelle 4.4 des zweiten Wärmeübertragers 4. Gemäß einer vorteilhaften Ausgestaltung ist die Kältemittel-Fluidleitung 8.1 als integraler Bestandteil des ersten Wärmeübertragers 3 ausgebildet, ohne die Dimensionen des ersten Wärmeübertragers 3 zu einer Außenseite des Komponentenmoduls 1 zu überragen. Die Kältemittel-Fluidschnittstelle 4.4 ist an einer Innenseite 11 des zweiten Wärmeübertragers 4 ausgebildet und parallel zur ersten Hauptrichtung T1 orientiert ist. Die Fluidschnittstellen 3.3 und 4.4 sind miteinander verschraubt.

Die zweite Kältemittel-Fluidschnittstelle des ersten Wärmeübertragers 3 befindet sich an einer dem Kompressorgehäuse 2 zugewandten Seite, an welcher der erste Wärmeübertrager 3 mit dem Kompressorgehäuse 2 vorteilhafterweise mittels zwei Schrauben verschraubt ist. Im gezeigten Ausführungsbeispiel ist aufgrund der Perspektivansicht nur eine der beiden Schrauben 10 zu sehen. Das Kompressorgehäuse 2 ist mit seiner Körperlänge entlang einer zweiten Hauptrichtung T2 orientiert, welche mit der Kompressorrotationsachse R zusammenfällt und in eine Längsrichtung L versetzt zur ersten Hauptrichtung T1 parallel ist. Die zweite Kältemittel-Fluidschnittstelle des ersten Wärmeübertragers 3 führt direkt mittels einer Kältemittel-Fluidleitung in den Ventilblock 6.1.

Von dem Kompressorgehäuse 2 führt eine Kältemittel-Fluidleitung 8.2 zu einer an der Innenseite 11 des zweiten Wärmeübertragers 4 ausgebildeten weiteren Kältemittel-Fluidschnittstelle 4.3 für Kältemittel, wobei die Kältemittel-Fluidleitung 8.2 mit der Kältemittel-Fluidschnittstelle 4.3 verschraubt ist. Diese weitere Kältemittel-Fluidschnittstelle 4.3 ist wie die Kältemittel-Fluidschnittstelle 4.4 parallel zur Hauptrichtung T1 orientiert.

Die Kältemittel-Fluidleitungen 8.1 und 8.2 sind steif ausgebildet. Optional kann die Kältemittel-Fluidleitung 8.2 bereichsweise flexibel ausgebildet sein. Durch Verschraubung der Kältemittel-Fluidleitungen 8.1 und 8.2 an den Kältemittel-Fluidschnittstellen 4.4 und 4.3 ist der zweite Wärmeübertrager 4 in der Anordnung des Komponentenmoduls 1 befestigt. Zusätzlich ist ein Komponentenmodulhalter 14 vorgesehen, an welchem der zweite Wärmeübertrager 4 befestigt ist, wobei der Komponentenmodulhalter 14 mit dem Kompressorgehäuse 2 verschraubt ist. Optional kann eine weitere Verschraubung des zweiten Wärmeübertragers 4 mit dem ersten Wärmeübertrager 3 und oder dem Kompressorgehäuse 2 vorgesehen sein.

An einer Außenseite 12 des zweiten Wärmeübertragers sind weitere Kältemittel-Fluidschnittstellen 4.5 und 4.6 ausgebildet. Diese weiteren Kältemittel-Fluidschnittstellen 4.5 und 4.6 sind ebenfalls parallel zur ersten Hauptrichtung T1 orientiert.

Weiterhin weist der zweite Wärmeübertrager 4 zwei Kühlmittel-Fluidschnittstellen 4.1 und 4.2 auf, um eine Einbindung des zweiten Wärmeübertragers 4 in einen Kühlmittelkreislauf zu ermöglichen. Die Kühlmittel-Fluidschnittstellen 4.1 und 4.2 sind zu einer Außenseite des Komponentenmoduls 1 orientiert. Somit sind die Kühlmittel-Fluidschnittstellen 3.1 und 3.2 des ersten Wärmeübertragers 3 und die die Kühlmittel-Fluidschnittstellen 4.1 und 4.2 des zweiten Wärmeübertragers 4 von einer Seite des Komponentenmoduls 1 zugänglich.

Im gezeigten Ausführungsbeispiel ist der erste Wärmeübertrager 3 in der Funktion als Verdampfer (Chiller) für Kältemittel eingerichtet, wobei der zweite Wärmeübertrager 4 in der Funktion als Kondensator für komprimiert zugeführtes Kältemittel eingerichtet ist. Optional kann der zweite Wärmeübertrager 4 als kombinierter Wärmeübertrager mit der Funktion eines Kondensators und der Funktion eines inneren Wärmeübertragers ausgebildet sein.

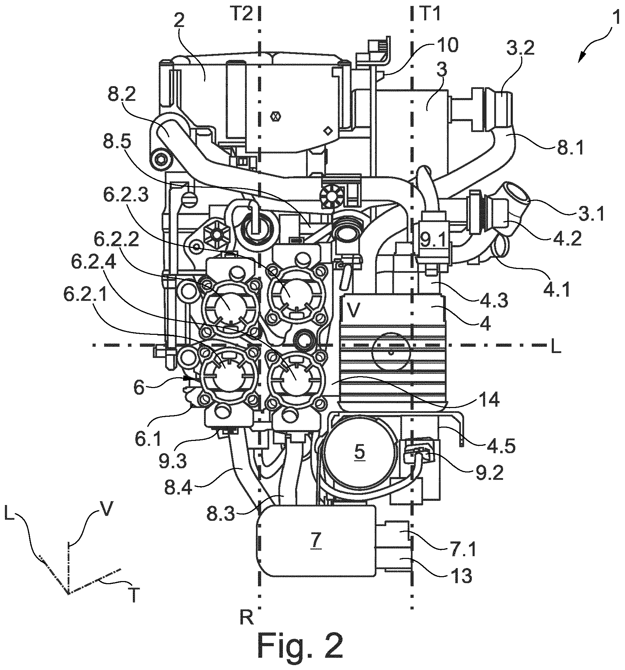

Als weitere Komponente weist das Komponentenmodul 1 eine Fluidverteilereinrichtung 6 zur Beeinflussung der Strömungspfade des Kältemittels innerhalb des Komponentenmoduls 1 auf. Befestigt ist die Fluidverteilereinrichtung 6 am Kompressorgehäuse 2 entlang der Körperlänge des Kompressorgehäuses 2 neben dem zweiten Wärmeübertrager 4. Zur Befestigung sind am Umfang des Kompressorgehäuses 2 Gewindelöcher (verdeckt) ausgebildet. Die Fluidverteilereinrichtung 6 umfasst in dem gezeigten Ausführungsbeispiel einen Ventilblock 6.1 (siehe Figur 2) mit vier Ventilen 6.2.1 bis 6.2.4, welche in dem Ventilblock 6.1 parallel zur Vertikalachse V orientiert sind. Die Orientierung der Ventile 6.2.1 bis 6.2.4ist somit quer zur Körperlänge des Kompressorgehäuses 2 und parallel zur Vertikalrichtung V. Die Bauhöhe der Fluidverteilereinrichtung 6 schließt mit der Körperlänge des zweiten Wärmeübertragers 4 in der Vertikalrichtung V ab. Die Ventile 6.2.1 und 6.2.2 dienen als Expansionsventile. Der Ventilblock 6.1 weist kältemittelseitig eine direkte Verbindung mit dem Kompressor beziehungsweise dem Kompressorgehäuse 2 auf, so dass keine zusätzlichen externen Kältemittel-Fluidleitungen erforderlich sind.

Ein Sammelbehälter 5 für Kältemittel bildet ebenfalls eine Komponente des Komponentenmoduls 1. Strömungstechnisch mit dem zweiten Wärmeübertrager 4 verbunden ist der Sammelbehälter 5 dazu ausgelegt, Kältemittel in flüssiger Form zu speichern. Seine Körperlänge, welche eine kreiszylindrische Form aufweist, ist größer als sein Körperdurchmesser, wobei der Sammelbehälter 5 neben dem zweiten Wärmeübertrager 4 angeordnet mit seiner Körperlänge parallel zur Vertikalrichtung V orientiert ist. Da die Körperlänge des Sammelbehälters 5 und die Körperlänge des zweiten Wärmeübertragers 4 parallel orientiert sind, ist der Sammelbehälter 5 somit quer zur ersten Hauptrichtung T1 und demzufolge quer zur Körperlänge des ersten Wärmeübertragers 3 orientiert. Im gezeigten Ausführungsbeispiel ist der Sammelbehälter 5 somit entlang der ersten Hauptrichtung T1 quer zu dieser neben dem zweiten Wärmeübertrager 4 angeordnet, so dass sich der zweite Wärmeübertrager 4 entlang der ersten Hauptrichtung T1 in einer Anordnung zwischen dem Sammelbehälter 5 und dem ersten Wärmeübertrager 3 befindet. Der Sammelbehälter 5 ist so dimensioniert, dass er den zweiten Wärmeübertrager 4 in der Vertikalrichtung V nicht überragt.

Zur Reduzierung von Geräuschen ist ein Muffler 7 als weitere Komponente des Komponentenmoduls 1 vorgesehen. Der Muffler 7 ist als ein Bestandteil einer mit dem Ventilblock 6.1 strömungstechnisch in Verbindung stehenden Kältemittel-Fluidleitung 8.3 ausgebildet und weist eine Körperlänge größer als eine Körperbreite auf. Innerhalb des Komponentenmoduls 1 ist der Muffler 7 neben dem Sammelbehälter 5 mit seiner Körperlänge im Wesentlichen parallel zur Längsrichtung L orientiert. In dieser Orientierung ist der Muffler 7 in Bezug auf den Sammelbehälter 5 in Richtung der Hauptrichtungen T1 und T2 versetzt quer zum Sammelbehälter 5 angeordnet. Der Muffler 7 ist mit seiner Körperlänge so dimensioniert, dass er den zweiten Wärmeübertrager 4 oder das Kompressorgehäuse 2 in der Längsrichtung L nicht überragt. Aufgrund seiner verhältnismäßig geringen Abmaße kann der Muffler 7 auch an anderen Positionen des Komponentenmoduls 1 platzsparend angeordnet sein. Zur strömungstechnischen Verbindung weist der Muffler 7 eine Kältemittel-Fluidschnittstelle 7.1 auf, deren Öffnung parallel zur Längsrichtung L orientiert ist.

Eine weitere strömungstechnisch mit dem Ventilblock 6.1 in Verbindung stehende Kältemittel-Fluidleitung 8.4 weist eine Kältemittel-Fluidschnittstelle 13 auf, welche in Bezug zur Kältemittel-Fluidschnittstelle 7.1 des Mufflers 7 in eine Richtung parallel zur Vertikalrichtung V versetzt ist, wobei die Öffnung der Kältemittel-Fluidleitung 8.4 parallel zur Längsrichtung L orientiert ist.

Die räumliche Ausdehnung des Komponentenmoduls 1 wird in den beiden Hauptrichtungen T1 und T2 auf der einen Seite von einer Stirnseite des Kompressorgehäuses 2 und auf der gegenüberliegenden Seite von dem Muffler 7 begrenzt. In der Längsrichtung L wird die räumliche Ausdehnung des Komponentenmoduls 1 von einer Körperlänge des Kompressorgehäuses 2 und auf der gegenüberliegenden Seite von dem ersten Wärmeübertrager 3 begrenzt. Die räumliche Ausdehnung des Komponentenmoduls 1 in der Vertikalrichtung V wird von dem zweiten Wärmeübertrager 4 begrenzt.

Die Bezugszeichen 9.1 bis 9.4 kennzeichnen elektrische Schnittstellen des Komponentenmoduls 1.

Das in Figur 1 gezeigte Ausführungsbeispiel ist insbesondere für batterieelektrische Fahrzeuge vorgesehen.

Die **Figur 2** zeigt eine Draufsicht des in Figur 1 gezeigten Ausführungsbeispiels des Komponentenmoduls 1 für ein Wärmepumpensystem eines Fahrzeugs in Vertikalrichtung V. Die Draufsicht verdeutlicht die Positionen der Anordnung der einzelnen Komponenten des Komponentenmoduls 1. Die Anordnung des zweiten Wärmeübertragers 4 in Bezug zum Kompressorgehäuse 2 und zur Fluidverteilereinrichtung 6 bildet einen Zwischenraum beziehungsweise Luftspalt. Zu erkennen ist hier eine weitere Kältemittelleitung 8.5, welche den zweiten Wärmeübertrager 4 mit dem Ventilblock 6.1 verbindet.

### Bezugszeichenliste

- 1: Komponentenmodul
- 2: Kompressorgehäuse
- 3: erster Wärmeübertrager
- 3.1, 3.2: Kühlmittel-Fluidschnittstelle
- 3.3: Kältemittel-Fluidschnittstelle
- 4: zweiter Wärmeübertrager
- 4.1, 4.2: Kühlmittel-Fluidschnittstelle
- 4.3, 4.4, 4.5, 4.6: Kältemittel-Fluidschnittstelle
- 5: Sammelbehälter
- 6: Fluidverteilereinrichtung
- 6.1: Ventilblock
- 6.2.1, 6.2.2, 6.2.3, 6.2.4: Ventil
- 7: Muffler
- 7.1: Kältemittel-Fluidschnittstelle
- 8.1, 8.2, 8.3, 8.4, 8.5: Kältemittel- Fluidleitung
- 9.1, 9.2, 9.3, 9.4: elektrische Schnittstelle
- 10: Schraube
- 11: Innenseite
- 12: Außenseite
- 13: Kältemittel-Fluidschnittstelle
- 14: Komponentenmodulhalter
- T1: erste Hauptrichtung
- T2: zweite Hauptrichtung
- L: Längsrichtung
- V: Vertikalrichtung
- R: Kompressorrotationsachse

## Patentansprüche

1. Komponentenmodul (1) eines Wärmepumpensystems für Fahrzeuge, insbesondere batterieelektrische Fahrzeuge (BEVs), welches zumindest folgende Komponenten aufweist: einen Kompressor mit einem Kompressorgehäuse (2), welches sich mit seiner Körperlänge entlang einer Kompressorrotationsachse (R) erstreckt, einen ersten Wärmeübertrager (3) und einen zweiten Wärmeübertrager (4), welche eine Körperlänge größer als eine Körperbreite aufweisen, einen Sammelbehälter (5) für Kältemittel, eine Fluidverteilereinrichtung (6), welche zur Beeinflussung eines Kältemittel-Strömungspfades eingerichtet ist, Kältemittel-Fluidschnittstellen (3.3, 4.3, 4.4, 4.5, 4.6, 7.1, 13), Kühlmittel-Fluidschnittstellen (3.1, 3.2, 4.1, 4.2) und Kältemitte-Fluidleitungen (8.1, 8.2, 8.3, 8.4, 8.5), welche die Komponenten strömungstechnisch miteinander verbinden, wobei
- der erste Wärmeübertrager (3) mit seiner Körperlänge entlang einer ersten Hauptrichtung (T1) orientiert ist,
- der zweite Wärmeübertrager (4) mit seiner Körperlänge orthogonal zur ersten Hauptrichtung (T1) entlang einer Vertikalrichtung (V) orientiert ist, und
- das Kompressorgehäuse (2) mit seiner Körperlänge entlang einer zweiten Hauptrichtung (T2) orientiert ist, welche in eine Längsrichtung (L) versetzt zur ersten Hauptrichtung (T1) parallel ist.

2. Komponentenmodul (1) nach Anspruch 1, **dadurch gekennzeichnet, dass** zumindest der erste Wärmeübertrager (3) und/oder der zweite Wärmeübertrager an dem Kompressorgehäuse (2) befestigt ist/sind.

3. Komponentenmodul (1) nach einem der Ansprüche 1 oder 2, **dadurch gekennzeichnet, dass** der erste Wärmeübertrager (3) als Verdampfer (Chiller) für Kältemittel eingerichtet ist, wobei der zweite Wärmeübertrager (4) als Kondensator für Kältemittel eingerichtet ist.

4. Komponentenmodul (1) nach einem der Ansprüche 1 oder 2, **dadurch gekennzeichnet, dass** der erste Wärmeübertrager (3) als Verdampfer (Chiller) für Kältemittel eingerichtet ist, wobei der zweite Wärmeübertrager (4) als Kondensator mit innerem Wärmeübertrager für Kältemittel eingerichtet ist.

5. Komponentenmodul (1) nach einem der Ansprüche 1 bis 4, **dadurch gekennzeichnet, dass** die Fluidverteilereinrichtung (6) einen Ventilblock (6.1) mit mindestes zwei, bevorzugt drei, besonders bevorzugt vier Ventilen (6.2.1, 6.2.2, 6.2.3, 6.2.4) aufweist, wobei die Ventile (6.2.1, 6.2.2, 6.2.3, 6.2.4) im Ventilbock (6.1) parallel zur Vertikalrichtung (V) orientiert sind.

6. Komponentenmodul (1) nach einem der Ansprüche 1 bis 5, **dadurch gekennzeichnet, dass** der erste Wärmeübertrager (3) und der Ventilblock (6.1) der Fluidverteilereinrichtung (6) an einander zugewandten Seiten so miteinander kontaktiert sind, dass zwischen dem ersten Wärmeübertrager (3) und dem Ventilblock (6.1) der Fluidverteilereinrichtung (6) keine externen Kältemittel-Fluidleitungen erforderlich sind.

7. Komponentenmodul (1) nach einem der Ansprüche 1 bis 6, **dadurch gekennzeichnet, dass** zwischen dem Kompressorgehäuse (2) und dem zweiten Wärmeübertrager (4) ein Luftspalt ausgebildet ist.

8. Komponentenmodul (1) nach einem der Ansprüche 1 bis 7, **dadurch gekennzeichnet, dass** die Fluidverteilereinrichtung (6) am Kompressorgehäuse (2) entlang der Körperlänge des Kompressorgehäuses (2) neben dem zweiten Wärmeübertrager (4) so befestigt ist, dass sie die Körperlänge des zweiten Wärmeübertragers (4) in der Vertikalrichtung (V) nicht überragt.

9. Komponentenmodul (1) nach einem der Ansprüche 1 bis 8, **dadurch gekennzeichnet, dass** der Sammelbehälter (5) für Kältemittel eine Körperlänge größer als eine Körperbreite aufweist, wobei der Sammelbehälter (5) neben dem zweiten Wärmeübertrager (4) angeordnet mit seiner Körperlänge parallel zur Vertikalrichtung (V) orientiert ist.

10. Komponentenmodul (1) nach Anspruch 9, **dadurch gekennzeichnet, dass** der Sammelbehälter (5) den zweiten Wärmeübertrager (4) in der Vertikalrichtung (V) nicht überragt.

11. Komponentenmodul (1) nach einem der Ansprüche 1 bis 10, ferner aufweisend einen Muffler (7) mit einer Körperlänge größer als eine Körperbreite, wobei der Muffler (7) neben dem Sammelbehälter (5) mit seiner Körperlänge im Wesentlichen parallel zur Längsrichtung (L) orientiert ist.

12. Komponentenmodul (1) nach einem der Ansprüche 1 bis 11, **dadurch gekennzeichnet, dass** sich die Kühlmittel-Fluidschnittstellen (3.1, 3.2, 4.1, 4.2) an einer Seite des Komponentenmoduls (1) befinden.

13. Komponentenmodul (1) nach einem der Ansprüche 1 bis 12, **dadurch gekennzeichnet, dass** der zweite Wärmeübertrager (4) in der Anordnung im Komponentenmodul (1) eine Innenseite (11) und eine Außenseite (12) aufweist, wobei an der Innenseite (11) zumindest eine Kältemittel-Fluidschnittstelle (4.3) parallel zur zweiten Hauptrichtung (T2) orientiert ausgebildet ist, wobei eine das Kompressorgehäuse (2) und den zweiten Wärmeübertrager (4) verbindende Kältemittel-Fluidleitung (8.2) an der mindestens einen Kältemittel-Fluidschnittstelle (4.3) angeschlossen ist.

14. Komponentenmodul (1) nach einem der Ansprüche 1 bis 13, **dadurch gekennzeichnet, dass** die das Kompressorgehäuse (2) und den zweiten Wärmeübertrager (4) verbindende Kältemittel-Fluidleitung (8.2) den zweiten Wärmeübertrager (4) in der Vertikalrichtung (V) nicht überragt.
